# EUROPEAN PATENT APPLICATION

(11) **EP 4 394 958 A1**
(43) Date of publication of application: **03.07.2024**
(21) Application number: 22876360.3
(22) Date of filing: 28.09.2022
(51) Int. Cl.: H01M 8/1213, H01M 4/86, H01M 8/04, H01M 8/12, H01M 8/1253, H01M 8/2475

(54) **ELECTROCHEMICAL CELL, ELECTROCHEMICAL CELL DEVICE, MODULE, AND MODULE STORAGE DEVICE**

(30) Priority: 30.09.2021 JP 2021161460
(71) Applicant: Kyocera Corporation, Kyoto-shi Kyoto 612-8501 (JP)
(72) Inventor: MIYAZAKI, Kazunari, Kyoto-shi, Kyoto 612-8501 (JP)
(74) Representative: Viering, Jentschura & Partner mbB Patent- und Rechtsanwälte
(86) International application number: PCT/JP2022/036225
(87) International publication number: WO 2023/054494

(57) **Abstract**

An electrochemical cell includes a first electrode layer, a second electrode layer, and a solid electrolyte layer. The first electrode layer includes a first material and a second material having ion conductivity. The solid electrolyte layer is located between the first electrode layer and the second electrode layer, and contains Zr (zirconium). The first material has a higher electron conductivity than the second material. The first electrode layer includes a first part containing the first material and a second part located between the first part and the solid electrolyte layer.

## Description

### TECHNICAL FIELD

The present disclosure relates to an electrochemical cell, an electrochemical cell device, a module, and a module housing device.

### BACKGROUND OF INVENTION

In recent years, various fuel cell stack devices each including a plurality of fuel cells have been proposed, as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: JP 2014-524655 T

### SUMMARY

In an aspect of an embodiment, an electrochemical cell includes a first electrode layer, a second electrode layer, and a solid electrolyte layer. The first electrode layer includes a first material and a second material having ion conductivity. The solid electrolyte layer is located between the first electrode layer and the second electrode layer, and contains zirconium (Zr). The first material has a higher electron conductivity than the second material. The first electrode layer includes a first part containing the first material and a second part located between the first part and the solid electrolyte layer.

An electrochemical cell device of the present disclosure includes a cell stack containing the electrochemical cell described above.

A module of the present disclosure includes the electrochemical cell device described above and a storage container housing the electrochemical cell device.

Further, a module housing device of the present disclosure includes the module described above, an auxiliary device for operating the module, and an external case that houses the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 2A is a perspective view illustrating an example of an electrochemical cell device according to the first embodiment.
FIG. 2B is a cross-sectional view taken along a line X-X illustrated in FIG. 2A.
FIG. 2C is a top view illustrating an example of the electrochemical cell device according to the first embodiment.
FIG. 3 is an enlarged cross-sectional view of a region R1 indicated in FIG. 1A.
FIG. 4 is an exterior perspective view illustrating an example of a module according to the first embodiment.
FIG. 5 is an exploded perspective view schematically illustrating an example of a module housing device according to the first embodiment.
FIG. 6 is a cross-sectional view illustrating an electrochemical cell device according to a second embodiment.
FIG. 7 is a horizontal cross-sectional view illustrating an example of an electrochemical cell according to the second embodiment.
FIG. 8 is an enlarged cross-sectional view of a region R2 indicated in FIG. 7.
FIG. 9A is a perspective view illustrating an example of an electrochemical cell according to a third embodiment.
FIG. 9B is a partial cross-sectional view of the electrochemical cell illustrated in FIG. 9A.
FIG. 9C is an enlarged cross-sectional view of a region R3 indicated in FIG. 9B.
FIG. 10A is a horizontal cross-sectional view illustrating an example of an electrochemical cell according to a fourth embodiment.
FIG. 10B is a horizontal cross-sectional view illustrating another example of the electrochemical cell according to the fourth embodiment.
FIG. 10C is a horizontal cross-sectional view illustrating another example of the electrochemical cell according to the fourth embodiment.
FIG. 11 is an enlarged cross-sectional view of a region R4 indicated in FIG. 10A.

### DESCRIPTION OF EMBODIMENTS

Embodiments of an electrochemical cell, an electrochemical cell device, a module and a module housing device disclosed in the present application will now be described in detail with reference to the accompanying drawings. Note that the disclosure is not limited by the following embodiments.

Note that the drawings are schematic and that the dimensional relationships between elements, the proportions of the elements, and the like may differ from the actual ones. Further, there may be differences between the drawings in the dimensional relationships, proportions, and the like.

### First Embodiment

### Configuration of Electrochemical Cell

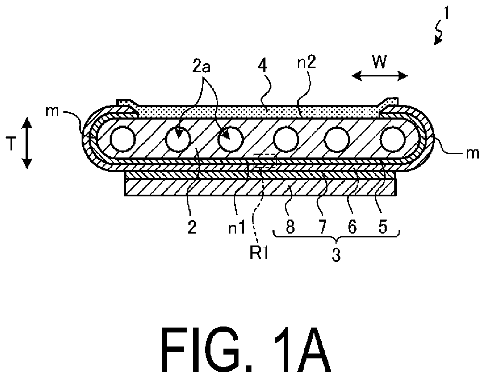

First, with reference to FIGs. 1A to 1C, an example of a solid oxide fuel cell will be described as an electrochemical cell constituting the electrochemical cell device according to the first embodiment. The electrochemical cell device may include a cell stack including a plurality of the electrochemical cells. The electrochemical cell device including the plurality of electrochemical cells is simply referred to as a cell stack device.

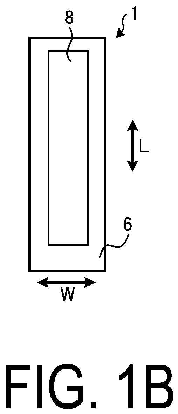

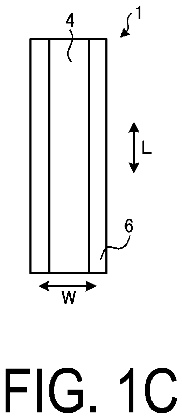

FIG. 1A is a horizontal cross-sectional view illustrating an example of an electrochemical cell according to the first embodiment, FIG. 1B is a side view of an example of the electrochemical cell according to the first embodiment when viewed from an air electrode side, and FIG. 1C is a side view of an example of the electrochemical cell 1 according to the first embodiment when viewed from an interconnector side. Note that FIGs. 1A to 1C each illustrate an enlarged view of a part of a respective one of configurations of the electrochemical cell. Hereinafter, the electrochemical cell may be simply referred to as a cell.

In the example illustrated in FIGs. 1A to 1C, the cell 1 is hollow flat plate-shaped, and has an elongated plate shape. As illustrated in FIG. 1B, the overall shape of the cell 1 when viewed from the side is, for example, a rectangle having a side length of from 5 cm to 50 cm in a length direction L and a length of from 1 cm to 10 cm in a width direction W orthogonal to the length direction L. The thickness in a thickness direction T of the entire cell 1 is, for example, from 1 mm to 5 mm.

As illustrated in FIG. 1A, the cell 1 includes a support substrate 2 with electrical conductivity, an element portion 3, and an interconnector 4. The support substrate 2 has a pillar shape having a pair of a first surface n1 and a second surface n2 that face each other, and a pair of arc-shaped side surfaces m that connect the first surface n1 and the second surface n2.

The element portion 3 is provided on the first surface n1 of the support substrate 2. The element portion 3 includes a fuel electrode layer 5, a solid electrolyte layer 6, and an air electrode layer 8. In the example illustrated in FIG. 1A, the interconnector 4 is located on the second surface n2 of the cell 1. The cell 1 may include an intermediate layer 7 between the solid electrolyte layer 6 and the air electrode layer 8.

As illustrated in FIG. 1B, the air electrode layer 8 does not extend to the lower end of the cell 1. At the lower end portion of the cell 1, only the solid electrolyte layer 6 is exposed on a surface of the first surface n1. As illustrated in FIG. 1C, the interconnector 4 may extend to the lower end of the cell 1. At a lower end portion of the cell 1, the interconnector 4 and the solid electrolyte layer 6 are exposed on the surface. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of constituent members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability and allows a fuel gas flowing through the gas-flow passages 2a to pass through to the fuel electrode layer 5. The support substrate 2 may be electrically conductive. The support substrate 2 having electrical conductivity collects electricity generated in the element portion 3 to the interconnector 4.

The material of the support substrate 2 includes, for example, an iron group metal component and an inorganic oxide. For example, the iron group metal component may be, for example, Ni (nickel) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

The fuel electrode layer 5 may be made of a porous electrically conductive ceramic. As the material of the fuel electrode layer 5, for example, ceramics containing: ZrO₂ in which a calcium oxide, a magnesium oxide, or a rare earth element oxide is contained as a solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is contained as a solid solution may be referred to as stabilized zirconia. Stabilized zirconia also includes partially stabilized zirconia. The fuel electrode layer 5 is an example of the first electrode layer.

The fuel electrode layer 5 may contain, for example, cerium oxide (CeO₂) in which a rare earth element such as lanthanum (La), gadolinium (Gd), or samarium (Sm) is contained as a solid solution. The fuel electrode layer 5 may contain a perovskite-type compound such as BamO₃ or SrMO₃ (where M is Zr and/or Ce) in which a rare earth element is contained as a solid solution.

The content of ZrO₂, CeO₂, BaMO₃, SrMO₃, or the like in which the rare earth element oxide is contained as a solid solution in the fuel electrode layer 5 may be in a range from 35 vol% to 65 vol%. The content of Ni and/or NiO may be from 65 vol% to 35 vol%. The porosity of the fuel electrode layer 5 may be 15% or more, particularly in a range from 20% to 40%. The thickness of the fuel electrode layer 5 may be from 1 µm to 30 µm. Details of the fuel electrode layer 5 will be described later.

The solid electrolyte layer 6 is an electrolyte and delivers ions between the fuel electrode layer 5 and the air electrode layer 8. At the same time, the solid electrolyte layer 6 has gas blocking properties, and makes leakage of the fuel gas and the oxygen-containing gas less likely to occur.

The solid electrolyte layer 6 contains Zr. The material of the solid electrolyte layer 6 may be, for example, ZrO₂ in which from 3 mole% to 15 mole% of a rare earth element oxide, calcium oxide, or magnesium oxide is contained as a solid solution. The rare earth element oxide may contain, for example, one or more rare earth elements selected from Sc, Y, La, Nd, Sm, Gd, Dy, and Yb. The material of the solid electrolyte layer 6 may be, for example, stabilized zirconia containing Yb. The solid electrolyte layer 6 may contain, for example, a perovskite-type compound such as BaZrO₃ or SrZrO₃ in which a rare earth element such as Sc, Y, La, Nd, Sm, Gd, Dy, or Yb is contained as a solid solution.

The air electrode layer 8 has gas permeability. The air electrode layer 8 is an example of the second electrode layer. The open porosity of the air electrode layer 8 may be, for example, in the range from 20% to 50%, particularly from 30% to 50%.

The material of the air electrode layer 8 is not particularly limited as long as the material is commonly used for the air electrode. The material of the air electrode layer 8 may be, for example, an electrically conductive ceramic such as a so-called ABO₃-type perovskite oxide.

The material of the air electrode layer 8 may be, for example, a composite oxide in which Sr (strontium) and La (lanthanum) coexist in the A-site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO_{3.} Here, x is 0 < x < 1, and y is 0 < y < 1.

When the element portion 3 includes the intermediate layer 7, the intermediate layer 7 functions as a diffusion prevention layer. When an element such as strontium (Sr) contained in the air electrode layer 8 diffuses into the solid electrolyte layer 6, a resistance layer such as, for example, SrZrO₃ is formed in the solid electrolyte layer 6. The intermediate layer 7 makes it difficult to diffuse Sr, thereby making it difficult to form SrZrO₃ and other oxides having electrical insulation.

The material of the intermediate layer 7 is not particularly limited as long as the material is one generally used for the diffusion prevention layer of elements between the air electrode layer 8 and the solid electrolyte layer 6. The material of the intermediate layer 7 may contain, for example, CeO₂ (cerium oxide) in which rare earth elements other than Ce (cerium) are in solid solution. As such rare earth elements, for example, Gd (gadolinium), Sm (samarium), or the like may be used.

The interconnector 4 is dense, and makes the leakage of the fuel gas flowing through the gas-flow passages 2a located inside the support substrate 2, and of the oxygen-containing gas flowing outside the support substrate 2 less likely to occur. The interconnector 4 may have a relative density of 93% or more; particularly 95% or more.

As the material of the interconnector 4, a lanthanum chromite-based perovskite-type oxide (LaCrOs-based oxide), a lanthanum strontium titanium-based perovskite-type oxide (LaSrTiO₃-based oxide), or the like may be used. These materials have electrical conductivity, and are unlikely to be reduced and also unlikely to be oxidized even when brought into contact with a fuel gas such as a hydrogen-containing gas and an oxygen-containing gas such as air. A metal or an alloy may be used as the material of the interconnector 4.

### Configuration of Electrochemical Cell Device

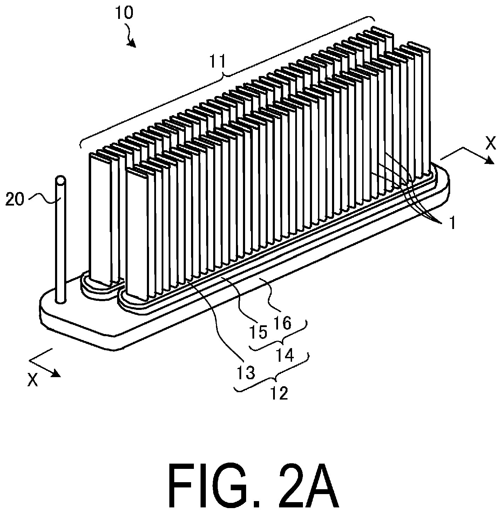

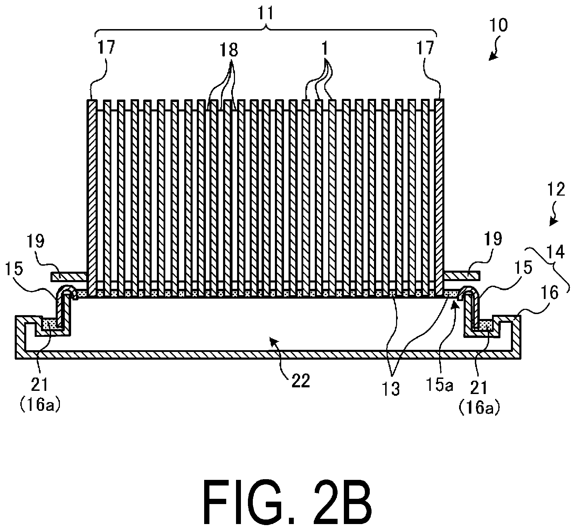

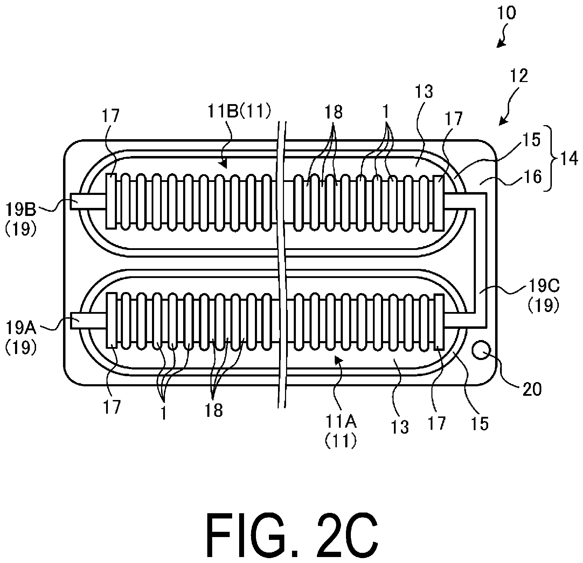

An electrochemical cell device according to the present embodiment using the electrochemical cell described above will be described with reference to FIGs. 2A to 2C. FIG. 2A is a perspective view illustrating an example of the electrochemical cell device according to the first embodiment, FIG. 2B is a cross-sectional view taken along a line X-X illustrated in FIG. 2A, and FIG. 2C is a top view illustrating an example of the electrochemical cell device according to the first embodiment.

As illustrated in FIG. 2A, a cell stack device 10 includes a cell stack 11 including a plurality of the cells 1 arrayed (stacked) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, constituting the support member 14, are made of metal and electrically conductive, for example.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding material 21, with which the recessed groove 16a of the gas tank 16 is filled.

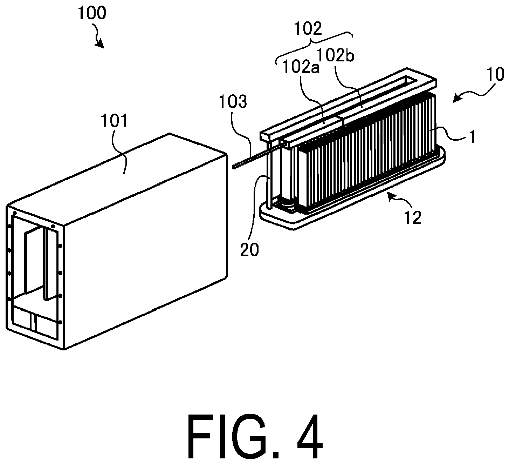

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas supplied to the gas tank 16 is produced by a reformer 102 (see FIG. 4), which will be described later.

A hydrogen-rich fuel gas can be produced, for example, by steam-reforming a raw fuel. When the fuel gas is produced by steam-reforming, the fuel gas contains steam.

In the example illustrated in FIG. 2A, the cell stack device 10 includes two rows of the cell stacks 11, the two support bodies 15, and the gas tank 16. Each of the two rows of the cell stacks 11 includes the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15. Although the cell stack device 10 including the two rows of cell stacks 11 is illustrated in the 2A, the cell stack device may include one row of cell stacks 11 or three or more rows of cell stacks 11.

The insertion hole 15a has, for example, an oval shape in a top surface view. The length of the insertion hole 15a in an arrangement direction of the cells 1, that is, the thickness direction T, may be longer than the distance between two end current collection members 17 located at both ends of the cell stack 11, for example. The width of the insertion hole 15a may be, for example, greater than the length of the cell 1 in the width direction W (see FIG. 1A).

As illustrated in FIG. 2B, the joined portions between the inner wall of the insertion hole 15a and the lower end portions of the cells 1 are filled with the fixing material 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series the fuel electrode layer 5 of one of the adjacent ones of the cells 1 with the air electrode layer 8 of the other one of the adjacent ones of the cells 1. More specifically, the electrically conductive member 18 connects the interconnector 4 electrically connected to the fuel electrode layer 5 of the one of the adjacent ones of the cells 1 and the air electrode layer 8 of the other one of the adjacent ones of the cells 1. Note that, when the interconnector 4 is made of metal or alloy, the interconnector 4 and the electrically conductive member 18 may be integrated with each other, or the electrically conductive member 18 may also serve as the interconnector 4.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Details of Fuel Electrode Layer

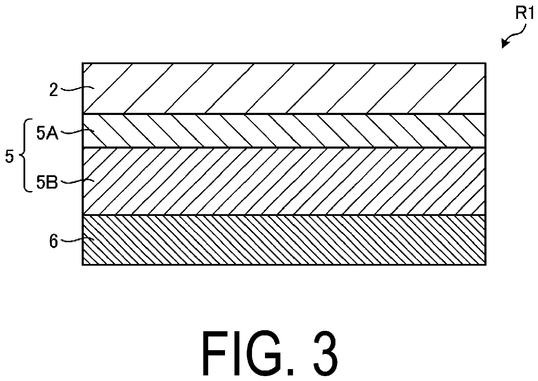

Details of the fuel electrode layer 5 according to the first embodiment will be described next with reference to FIG. 3. FIG. 3 is an enlarged cross-sectional view of the region R1 indicated in FIG. 1A.

As illustrated in FIG. 3, the fuel electrode layer 5 includes a first part 5A and a second part 5B. The first part 5A is located to be in contact with the support substrate 2. The second part 5B is located between the first part 5A and the solid electrolyte layer 6. The thickness of the fuel electrode layer 5 may be, for example, 20 µm or less. The second part 5B is located to be in contact with the solid electrolyte layer 6.

The fuel electrode layer 5 contains a first material and a second material having ion conductivity. The first material has a higher electron conductivity than the second material. The electron conductivity of each of the first material and the second material can be evaluated by, for example, preparing a rectangular sintered body having the composition of the first material and a rectangular sintered body having the composition of the second material, and measuring the ion conductivity and electrical conductivity of each sintered body.

The first material may contain cerium. The first material may be, for example, a ceria-based compound containing CeO₂. The first material may be, for example, CeO₂ in which Y, La, Pr, Nd, Sm, Eu, Gd, Dy, Ho, Er, Yb, or the like is contained as a solid solution. The first material may be, for example, a perovskite-type compound such as BaMO₃ or SrMO₃ (where M is Zr and/or Ce) in which a rare earth element such as Sc, Y, La, Nd, Sm, Gd, Dy, or Yb is contained as a solid solution. The fuel electrode layer 5 may contain a plurality of types of first materials.

The second material contains Zr. The second material may be, for example, a zirconia-based compound or a perovskite-type compound. The second material may be, for example, stabilized zirconia containing Yb. The second material may be, for example, a perovskite-type compound such as BaZrO₃ or SrZrO₃ in which a rare earth element such as Sc, Y, La, Nd, Sm, Gd, Dy, or Yb is contained as a solid solution. The fuel electrode layer 5 may contain a plurality of types of second materials.

The first part 5A includes the first material. The first part 5A has a higher content proportion of the first material than the second part 5B. The second part 5B has a higher content proportion of the second material than the first part 5A. In the first part 5A, the content proportion of the first material may be higher than the content proportion of the second material. In the second part 5B, the content proportion of the second material may be higher than the content proportion of the first material. The content proportions of the first material and the second material may be confirmed by, for example, elemental analysis using the EPMA. Specifically, for example, the cross section of the element portion 3 in a layering direction is mirror-polished to bisect the fuel electrode layer 5 in the thickness direction, and a portion on the support substrate 2 side is defined as the first part 5A and a portion on the solid electrolyte layer 6 side is defined as the second part 5B. The content proportion of each of the first material and the second material per unit area can be calculated by performing semiquantitative analysis on each of the first material and the second material in a predetermined area of the cross section defined as the second part 5B. The area subjected to the elemental analysis may be, for example, an area of a quadrilateral with one side having a length equal to or less than the thickness of the second part 5B. Note that, the content proportion of the first material referred to here is the mass of a main element (for example, Ce) constituting the first material with respect to the total mass of elements detected in a measurement region.

The first part 5A and the second part 5B may be distinguished from each other, for example, by taking a portion where the content proportion of the first material is determined to be higher than in a vicinity of the solid electrolyte layer 6 by elemental analysis using the EPMA as the first part 5A and taking a portion in the vicinity of the solid electrolyte layer 6 as the second part 5B. The first part 5A and the second part 5B may be distinguished from each other by taking a portion in which the content proportion of the first material is determined to be higher than the content proportion of the second material as the first part 5A and taking the remaining portion as the second portion 5B. Specifically, for example, a cross section of the element portion 3 in the layering direction is mirror-polished, and each element is subjected to surface analysis or line analysis in the layering direction by the EPMA to obtain a concentration mapping or concentration profile of each element. From the obtained concentration mapping result or concentration profile result of each element, a region in the fuel electrode layer 5 in which the content proportion of the first material is higher than in the vicinity of the solid electrolyte layer 6 or higher than the content proportion of the second material can be taken as the first part 5A, and the other region can be taken as the second part 5B.

As described above, when the first part 5A contains the first material having high electron conductivity, electrode activity and electrical conductivity of the fuel electrode layer 5 can be enhanced. Since the second part 5B is provided between the solid electrolyte layer 6 and the first part 5A in which the content proportion of the first material is higher than in the vicinity of the solid electrolyte layer 6 or higher than the content proportion of the second material, components derived from the first material are less likely to diffuse into the solid electrolyte layer 6, and a low-conductive reaction layer is less likely to be formed in the solid electrolyte layer 6 or at an interface between the solid electrolyte layer 6 and the fuel electrode layer 5. As a result, the problem of a decrease in electrical conductivity between the solid electrolyte layer 6 and the fuel electrode layer 5 can be suppressed. Thus, with the cell 1 according to the present embodiment, power generation capability can be improved. The solid electrolyte layer 6 need not contain constituent components of the first material, for example, Sm, Gd, and Ce.

The porosity of the first part 5A may be higher than the porosity of the second part 5B. Accordingly, the fuel gas easily permeates through the first part 5A located on the support substrate 2 side.

The thickness of the first part 5A may be smaller than the thickness of the second part 5B. Accordingly, the fuel gas easily permeates through the first part 5A located on the support substrate 2 side.

When the surface of the fuel electrode layer 5 located on the side opposite to the solid electrolyte layer 6 is defined as a first surface and the surface in contact with the solid electrolyte layer 6 is defined as a second surface, the content proportion of the first material in the vicinity of the first surface may be higher than the content proportion of the first material in the vicinity of the second surface. The vicinity of the first surface is a region closer to the first surface than to the solid electrolyte layer 6 in the fuel electrode layer 5, and the vicinity of the second surface is a region closer to the solid electrolyte layer 6 than to the first surface in the fuel electrode layer 5. The average value of the content proportion of the first material may gradually decrease from the first surface to the second surface. The average value of the content proportion of the second material may gradually decrease from the second surface to the first surface. When the content proportion of the first material having high electron conductivity is higher in the vicinity of the first surface than in the vicinity of the second surface as described above, the electrode activity and electrical conductivity of the fuel electrode layer 5 can be enhanced. Consequently, the formation of a low-electrical-conductivity reaction layer in the vicinity of the second surface can be suppressed.

The average value of the content proportion of each material is obtained as follows. For example, a cross section of the element portion 3 in the layering direction is mirror-polished, and each element is subjected to surface analysis or line analysis at at least five locations in the layering direction by the EPMA to obtain the concentration mapping or concentration profile of each element. Data of the obtained concentration mapping or concentration profile is integrated in a direction along the interface between the fuel electrode layer 5 and the solid electrolyte layer 6, and the average value of the concentration of each element is calculated. The average value of the concentrations of the main elements constituting each material thus obtained may be used as the average value of the content proportion of each material.

### Module

Descriptions of the module according to the present embodiment using the above-described electrochemical cell device will now be given with reference to FIG 4. FIG. 4 is an exterior perspective view illustrating a module according to the first embodiment. FIG. 4 illustrates a state in which the front and rear surfaces that are part of a storage container 101 are removed, and the cell stack device 10 of a fuel cell housed in the container is taken out rearward.

As illustrated in FIG. 4, the module 100 includes the storage container 101, and the cell stack device 10 housed in the storage container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

Then, the fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

The above-discussed module 100 is configured such that the cell stack device 10 with improved power generation capability is housed therein as described above, whereby the module 100 with the improved power generation capability can be realized.

### Module Housing Device

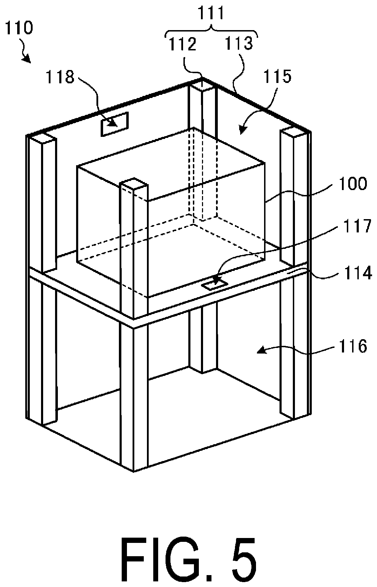

FIG. 5 is an exploded perspective view illustrating an example of a module housing device according to the first embodiment. A module housing device 110 according to the present embodiment includes an external case 111, the module 100 illustrated in FIG. 4, and an auxiliary device (not illustrated). The auxiliary device operates the module 100. The module 100 and the auxiliary device are housed in the external case 111. Note that in FIG. 5, the configuration is partially omitted.

The external case 111 of the module housing device 110 illustrated in FIG. 5 includes a support 112 and an external plate 113. A dividing plate 114 vertically partitions the interior of the external case 111. The space above the dividing plate 114 in the external case 111 is a module housing room 115 for housing the module 100. The space below the dividing plate 114 in the external case 111 is an auxiliary device housing room 116 for housing the auxiliary device configured to operate the module 100. Note that in FIG. 5, the auxiliary device housed in the auxiliary device housing room 116 is omitted.

The dividing plate 114 includes an air circulation hole 117 for causing air in the auxiliary device housing room 116 to flow into the module housing room 115 side. The external plate 113 constituting the module housing room 115 includes an exhaust hole 118 for discharging air inside the module housing room 115.

In the module housing device 110 discussed above, the module 100 with improved power generation capability is provided in the module housing room 115 as described above, whereby the module housing device 110 with improved power generation capability can be realized.

Note that, in the embodiment described above, the case where the support substrate of the hollow flat plate-shaped is used has been exemplified; however, the embodiment can also be applied to a cell stack device using a cylindrical support substrate.

### Second Embodiment

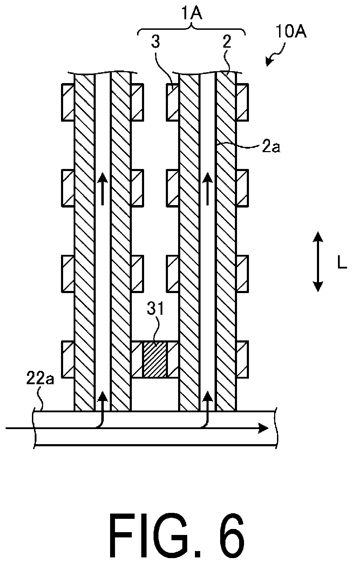

Next, an electrochemical cell and an electrochemical cell device according to a second embodiment will be described with reference to FIG. 6 to FIG. 8.

In the embodiment described above, a so-called "vertically striped type" electrochemical cell device, in which only one element portion including the fuel electrode layer, the solid electrolyte layer, and the air electrode layer is provided on the surface of the support substrate, is exemplified. However, the present disclosure can be applied to a horizontally striped type electrochemical cell device with an array of so-called "horizontally striped type" electrochemical cells, in which a plurality of element portions are provided on the surface of the support substrate at mutually separated locations, and adjacent element portions are electrically connected to each other.

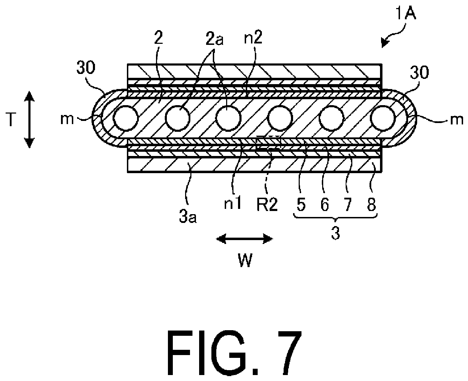

FIG. 6 is a cross-sectional view illustrating an electrochemical cell device according to the second embodiment. FIG. 7 is a horizontal cross-sectional view illustrating an example of an electrochemical cell according to the second embodiment.

As illustrated in FIG. 6, a cell stack device 10A according to the second embodiment includes a plurality of cells 1A extending in the length direction L from a pipe 22a configured to distribute a fuel gas. The cell 1A includes a plurality of element portions 3 on a support substrate 2. A gas-flow passage 2a, through which a fuel gas from the pipe 22a flows, is provided inside the support substrate 2.

The cells 1A are electrically connected to each other via connecting members 31. Each of the connecting members 31 is located between the element portions 3 each included in a corresponding one of the cells 1A and electrically connects adjacent ones of the cells 1A to each other. Specifically, the connecting member 31 electrically connects the air electrode layer 8 of the element portion 3 of one of the adjacent ones of the cells 1A to the fuel electrode layer 5 of the element portion 3 of the other one of the adjacent ones of the cells 1A.

As illustrated in FIG. 7, the cell 1A includes a support substrate 2, a pair of element portions 3, and a sealing portion 30. The support substrate 2 has a pillar shape having a first surface n1 and a second surface n2 which are a pair of flat surfaces and face each other, and a pair of arc-shaped side surfaces m that connect the first surface n1 and the second surface n2.

The pair of element portions 3 are located on the first surface n1 and the second surface n2 of the support substrate 2 so as to face each other. The sealing portion 30 is located to cover the side surface m of the support substrate 2.

The cell 1A has a shape that is symmetric with respect to a plane that passes through a center in the thickness direction T and is parallel to the main surface of the support substrate 2. The element portion 3 includes a fuel electrode layer 5, a solid electrolyte layer 6, an intermediate layer 7, and an air electrode layer 8 layered in that order.

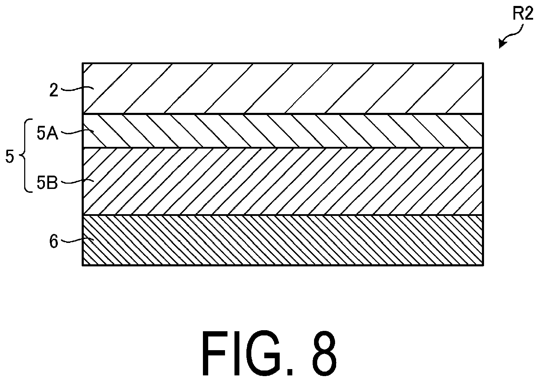

FIG. 8 is an enlarged cross-sectional view of the region R2 indicated in FIG. 7. As illustrated in FIG. 8, the fuel electrode layer 5 includes a second part 5B and a first part 5A located in sequence from the solid electrolyte layer 6 side.

The solid electrolyte layer 6 contains Zr. The fuel electrode layer 5 includes the first part 5A containing the first material and the second part 5B located between the first part 5A and the solid electrolyte layer 6. Accordingly, the electrode activity and electrical conductivity of the fuel electrode layer 5 can be enhanced. The content proportion of the first material in the vicinity of the first surface of fuel electrode layer 5 located on the side opposite to the solid electrolyte layer 6 may be higher than the content proportion of the first material in the vicinity of the second surface in contact with the solid electrolyte layer 6. Accordingly, a component derived from the first material is less likely to diffuse into the solid electrolyte layer 6, and a reaction layer having low electrical conductivity is less likely to be formed in the solid electrolyte layer 6 or at the interface between the solid electrolyte layer 6 and the fuel electrode layer 5. As a result, the problem of a decrease in electrical conductivity between the solid electrolyte layer 6 and the fuel electrode layer 5 can be suppressed. Thus, in the present embodiment, the cell 1A can improve power generation capability.

### Third Embodiment

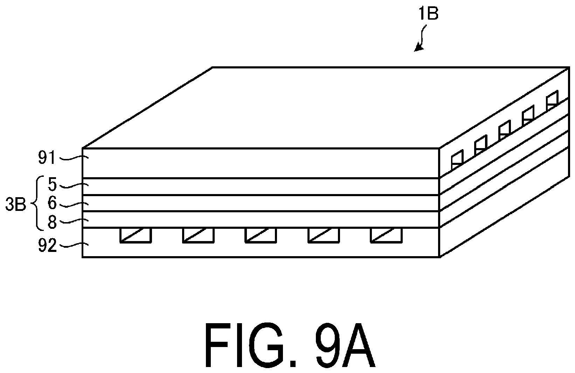

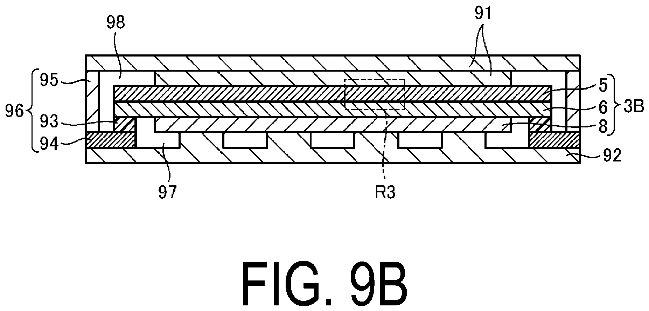

FIG. 9A is a perspective view illustrating an example of an electrochemical cell according to a third embodiment. FIG. 9B is a partial cross-sectional view of the electrochemical cell illustrated in FIG. 9A.

As illustrated in FIG. 9A, a cell 1B includes an element portion 3B, in which a fuel electrode layer 5, a solid electrolyte layer 6, and an air electrode layer 8 are layered. The element portion 3B is a site in which the solid electrolyte layer 6 is sandwiched between the fuel electrode layer 5 and the air electrode layer 8. In an electrochemical cell device in which a plurality of flat plate cells are layered, for example, a plurality of cells 1B are electrically connected by electrically conductive members 91 and 92, which are metal layers adjacent to each other. The electrically conductive members 91 and 92 electrically connect the adjacent cells 1B and each include a gas-flow passage for supplying gas to the fuel electrode layer 5 or the air electrode layer 8.

As illustrated in FIG. 9B, a sealing material for hermetically sealing a flow passage 98 of a fuel gas and a flow passage 97 of an oxygen-containing gas of the flat plate cell stack is provided. The sealing material is a fixing member 96 of the cell, and includes a bonding material 93, and support members 94 and 95, which constitute a frame. The bonding material 93 may be a glass or may be a metal material such as silver solder.

The support member 94 may be a so-called separator that separates the flow passage 98 of the fuel gas and the flow passage 97 of the oxygen-containing gas. The material of the support members 94 and 95 may be, for example, an electrically conductive metal, or may be an insulating ceramic. When the bonding material 93 is, for example, insulating glass, both the support members 94 and 95 may be metal, or one of the support members 94 and 95 may be an insulating material. When the bonding material 93 is an electrically conductive metal, both or one of the support members 94 and 95 may be an insulating material. When the support members 94 and 95 are metal, the support members 94 and 95 may be formed integrally with the electrically conductive member 92.

One of the bonding material 93 and the support members 94 and 95 has insulating properties and causes the two electrically conductive members 91 and 92 sandwiching the flat plate cell to be electrically insulated from each other.

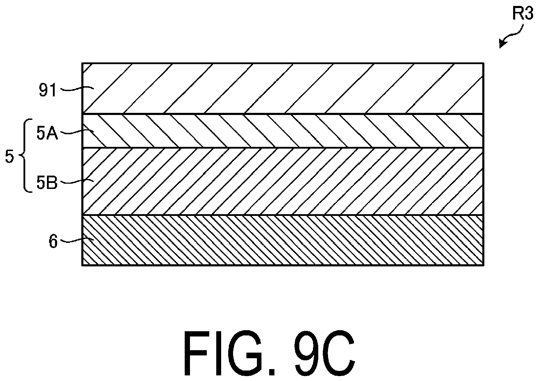

FIG. 9C is an enlarged cross-sectional view of a region R3 indicated in FIG. 9B. As illustrated in FIG. 9C, the fuel electrode layer 5 includes a second part 5B and a first part 5A located in sequence from the solid electrolyte layer 6 side.

The solid electrolyte layer 6 contains Zr. The fuel electrode layer 5 includes the first part 5A containing the first material and the second part 5B located between the first part 5A and the solid electrolyte layer 6. Accordingly, the electrode activity and electrical conductivity of the fuel electrode layer 5 can be enhanced. The content proportion of the first material in the vicinity of the first surface of fuel electrode layer 5 located on the side opposite to the solid electrolyte layer 6 may be higher than the content proportion of the first material in the vicinity of the second surface in contact with the solid electrolyte layer 6. Accordingly, a component derived from the first material is less likely to diffuse into the solid electrolyte layer 6, and a reaction layer having low electrical conductivity is less likely to be formed in the solid electrolyte layer 6 or at the interface between the solid electrolyte layer 6 and the fuel electrode layer 5. As a result, the problem of a decrease in electrical conductivity between the solid electrolyte layer 6 and the fuel electrode layer 5 can be suppressed. Thus, in the present embodiment, the cell 1B can improve power generation capability.

### Fourth Embodiment

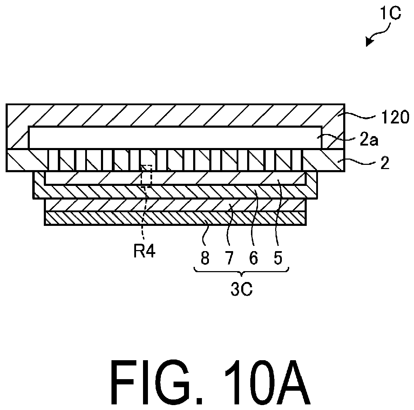

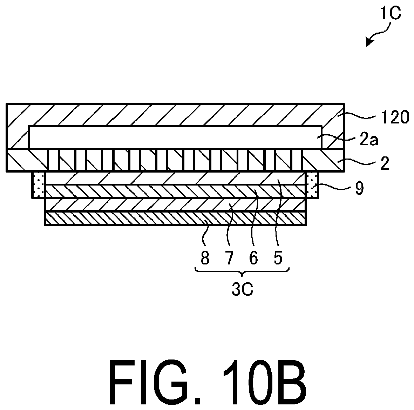

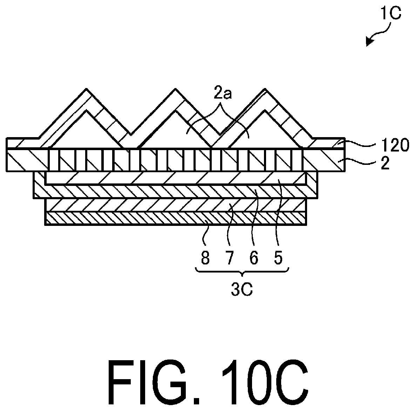

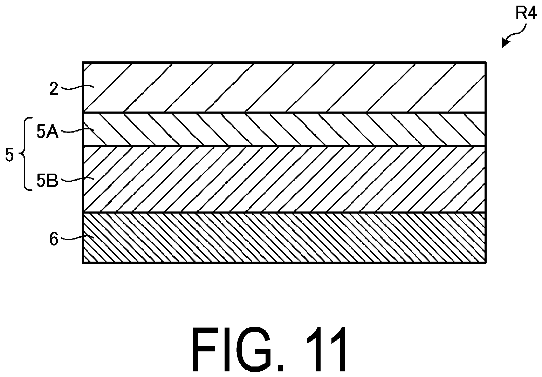

FIG. 10A is a horizontal cross-sectional view illustrating an example of an electrochemical cell according to a fourth embodiment. FIGs. 10B and 10C are horizontal cross-sectional views illustrating another example of the electrochemical cell according to the fourth embodiment. FIG. 11 is an enlarged view of the region R4 illustrated in FIG. 10A. Note that FIG. 11 can also be applied to the examples in FIGs. 10B and 10C.

As illustrated in FIGs. 10A to 10C, a cell 1C includes an element portion 3C in which a fuel electrode layer 5, a solid electrolyte layer 6, an intermediate layer 7, and an air electrode layer 8 are layered, and a support substrate 2. The support substrate 2 includes through holes or fine holes at a site in contact with the element portion 3, and includes a member 120 located outside the gas-flow passage 2a. The support substrate 2 allows gas to flow between the gas-flow passage 2a and the element portion 3C. The support substrate 2 may be made of, for example, one or more metal plates. A material of the metal plate may contain chromium. The metal plate may include a conductive coating layer. The support substrate 2 electrically connects adjacent ones of the cells 1C to each other. The element portion 3C may be directly formed on the support substrate 2 or may be bonded to the support substrate 2 by a bonding material.

In the example illustrated in FIG. 10A, the side surface of the fuel electrode layer 5 is covered with the solid electrolyte layer 6 to hermetically seal the gas-flow passage 2a through which the fuel gas flows. As illustrated in FIG. 10B, the side surface of the fuel electrode layer 5 may be covered and sealed with a sealing material 9 made of dense glass or ceramic. The sealing material 9 covering the side surface of the fuel electrode layer 5 may have electrical insulation properties.

The gas-flow passage 2a of the support substrate 2 may be made of the member 120 having unevenness as illustrated in FIG. 10C.

FIG. 11 is an enlarged cross-sectional view of the region R4 indicated in FIG. 10A. As illustrated in FIG. 11, the fuel electrode layer 5 includes a second part 5B and a first part 5A located in sequence from the solid electrolyte layer 6 side.

The solid electrolyte layer 6 contains Zr. The fuel electrode layer 5 includes the first part 5A containing the first material and the second part 5B located between the first part 5A and the solid electrolyte layer 6. Accordingly, the electrode activity and electrical conductivity of the fuel electrode layer 5 can be enhanced. The content proportion of the first material in the vicinity of the first surface of fuel electrode layer 5 located on the side opposite to the solid electrolyte layer 6 may be higher than the content proportion of the first material in the vicinity of the second surface in contact with the solid electrolyte layer 6. Accordingly, a component derived from the first material is less likely to diffuse into the solid electrolyte layer 6, and a reaction layer having low electrical conductivity is less likely to be formed in the solid electrolyte layer 6 or at the interface between the solid electrolyte layer 6 and the fuel electrode layer 5. As a result, the problem of a decrease in electrical conductivity between the solid electrolyte layer 6 and the fuel electrode layer 5 can be suppressed. Thus, in the present embodiment, the cell 1C can improve power generation capability.

### Other Embodiments

An electrochemical cell device according to other embodiments will be described.

In the above embodiments, a fuel cell, a fuel cell stack device, a fuel cell module, and a fuel cell device are illustrated as examples of the "electrochemical cell", the "electrochemical cell device", the "module", and the "module housing device"; other examples include an electrolytic cell, an electrolytic cell stack device, an electrolytic module, and an electrolytic device, respectively. The electrolytic cell includes a first electrode layer and a second electrode layer, and decomposes water vapor into hydrogen and oxygen or decomposes carbon dioxide into carbon monoxide and oxygen by supplying electric power. Although an oxide ion conductor or a hydrogen ion conductor is shown as an example of the electrolyte material of the electrochemical cell in the above embodiment, the electrolyte material may be a hydroxide ion conductor. According to the electrolytic cell, electrolytic cell stack device, electrolytic module, and electrolytic device discussed above, electrolytic performance can be improved.

While the present disclosure has been described in detail, the present disclosure is not limited to the aforementioned embodiment, and various changes, improvements, and the like can be made without departing from the gist of the present disclosure.

As described above, the electrochemical cell (cell 1) according to the embodiment includes the first electrode layer (fuel electrode layer 5), the second electrode layer (air electrode layer 8), and the solid electrolyte layer 6. The first electrode layer includes the first material and the second material having ion conductivity. The solid electrolyte layer 6 is located between the first electrode layer and the second electrode layer, and contains Zr. The first material has a higher electron conductivity than the second material. The first electrode layer includes the first part 5A containing the first material and the second part 5B located between the first part 5A and the solid electrolyte layer 6. This can improve the cell performance such as power generation capability and electrolytic performance of the electrochemical cell.

The electrochemical cell device (cell stack device 10) according to the present embodiment includes the cell stack 11 containing the electrochemical cell described above. This can improve the cell performance such as power generation capability and electrolytic performance of the electrochemical cell device.

The module 100 according to the embodiment includes the electrochemical cell device (the cell stack device 10) described above, and the storage container 101 housing the electrochemical cell device. Thus, the module 100 with improved cell performance such as power generation capability and electrolytic performance can be realized.

The module housing device 110 according to embodiment includes the module 100 described above, an auxiliary device configured to operate the module 100, and the external case 111 configured to accommodate the module 100 and the auxiliary device. Thus, the module housing device 110 with improved cell performance such as power generation capability and electrolytic performance can be realized.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

- 1: Cell
- 10: Cell stack device
- 11: Cell stack
- 12: Fixing member
- 13: Fixing material
- 14: Support member
- 15: Support body
- 16: Gas tank
- 17: End current collection member
- 18: Electrically conductive member
- 100: Module
- 110: Module housing device

## Claims

1. An electrochemical cell, comprising:
a first electrode layer comprising a first material and a second material, both having ion conductivity, the first material has higher electron conductivity than the second material;
a second electrode layer; and
a solid electrolyte layer located between the first electrode layer and the second electrode layer and containing zirconium (Zr), wherein
the first electrode layer further comprises:
a first part comprising the first material; and
a second part located between the first part and the solid electrolyte layer.

2. The electrochemical cell according to claim 1, wherein
a content proportion of the first material is higher in the first part than in the second part.

3. The electrochemical cell according to claim 1 or 2, wherein
in the second part, a content proportion of the second material is higher than a content proportion of the first material.

4. The electrochemical cell according to any one of claims 1 to 3, wherein
in the first part, a content proportion of the first material is higher than a content proportion of the second material.

5. The electrochemical cell according to any one of claims 1 to 4, wherein
a porosity is higher in the first part thanin the second part.

6. The electrochemical cell according to any one of claims 1 to 5, wherein
the first part has a thickness smaller than the second part.

7. An electrochemical cell, comprising:
a first electrode layer comprising a first material and a second material both having ion conductivity;
a second electrode layer; and
a solid electrolyte layer located between the first electrode layer and the second electrode layer and containing zirconium (Zr), wherein
the first electrode layer further comprises:
a first surface located on a side opposite to the solid electrolyte layer; and
a second surface in contact with the solid electrolyte layer, and
the first material has an electron conductivity higher than an electron conductivity of the second material, and a content proportion of the first material in a vicinity of the first surface is higher than a content proportion of the first material in a vicinity of the second surface.

8. The electrochemical cell according to claim 7, wherein
the content proportion of the first material gradually decreases from the first surface to the second surface.

9. The electrochemical cell according to claim 7 or 8, wherein
a content proportion of the second material gradually decreases from the second surface to the first surface.

10. The electrochemical cell according to any one of claims 1 to 9, wherein
the first material is a ceria-based compound, and
the second material is a zirconia-based compound or a perovskite-type compound.

11. The electrochemical cell according to any one of claims 1 to 10, wherein
the second material is stabilized zirconia.

12. The electrochemical cell according to any one of claims 1 to 11, wherein
the first material is CeO₂ in which Sm or Gd is contained as a solid solution.

13. An electrochemical cell device comprising:
a cell stack comprising the electrochemical cell according to any one of claims 1 to 12.

14. A module comprising:
the electrochemical cell device according to claim 13; and
a storage container housing the electrochemical cell device.

15. A module housing device comprising:
the module according to claim 14;
an auxiliary device configured to operate the module; and
an external case housing the module and the auxiliary device.
